# EUROPEAN PATENT APPLICATION

(11) **EP 1 931 006 A1**
(43) Date of publication of application: **11.06.2008**
(21) Application number: 06386040.7
(22) Date of filing: 04.12.2006
(51) Int. Cl.: H02G 7/05

(54) **Movable mounting clip for rope lights**

(71) Applicant: Paleohorinos, Ioannis, 570 22 Vipeth Sindos, Thessaloniki (GR)
(72) Inventor: Paleohorinos, Ioannis, 570 22 Vipeth Sindos, Thessaloniki (GR)

(57) **Abstract**

A movable mounting clip used to support rope lights and electric wires for mini bulbs in general on metal sheets or hollow sections of pole and/or through the centre of its body.

The clip is constructed with either one or two ends.

Its ends are socket - grips that can be, made in any geometric shape desired according to the circumstances in which they will be used.

They can be made of any suitable material available on the market (wood, plastic, rubber, metal or a combination thereof) in a flexible condition.

## Description

The invention consists in the construction of a movable mounting clip that is used to support rope lights and electric wires for mini bulbs in general on metal sheets or hollow sections of pole.

No similar, comparable movable mounting clip has been invented to date.

This movable mounting clip ensures strong and rapid retention of the rope light or electric wires of mini bulbs on a solid sheet or metal or plastic tube thus enabling the creation of different schematic layouts without any technical problems.

This invention regards a movable clip comprising the main body that is mounted by hand or mechanically, in the middle or at the end of which is the metal sheet or tube and at the ends of which in special sockets are grips which clasp the rope light or the electric wires.

The attached figures show a practical application.

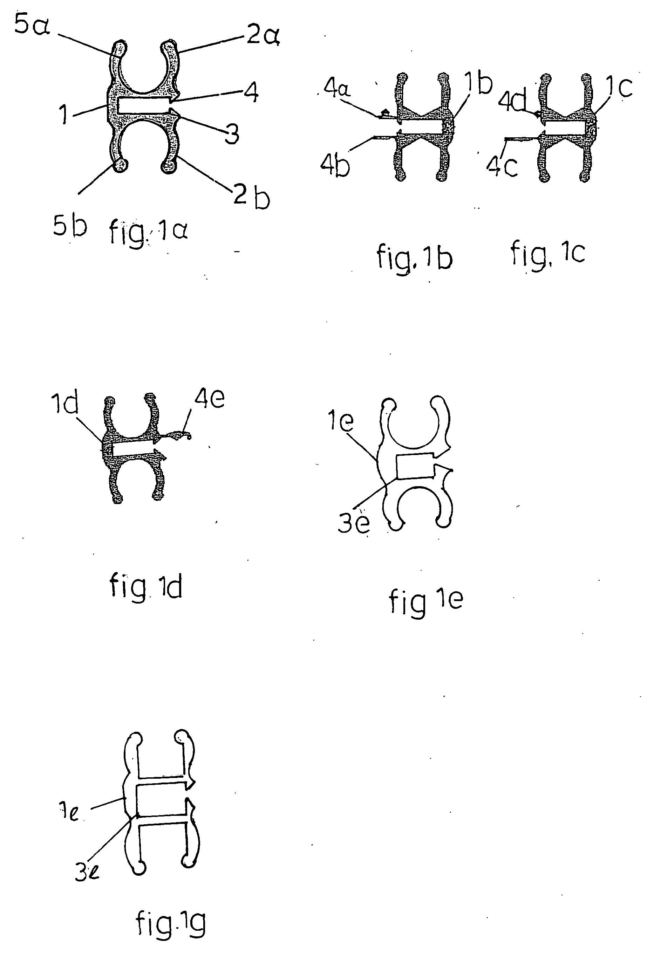

Figure 1a shows a front view of the double-ended clip (variation 1) for attaching two lines of rope lights or two electric wire lines.
Figure 1b shows a front view of the clip (variation 2), which fastens externally with two projecting strips.
Figure 1c shows a front view of the clip (variation 3), which fastens externally with one projecting strip and one pin.
Figure 1d shows a front view of the clip (variation 4), which fastens externally with one projecting strip.
Figure 1e shows a front view of the clip (variation 5) through the middle of which runs a hollow section.
Figure 1g shows a front view of tha clip (variation 11).

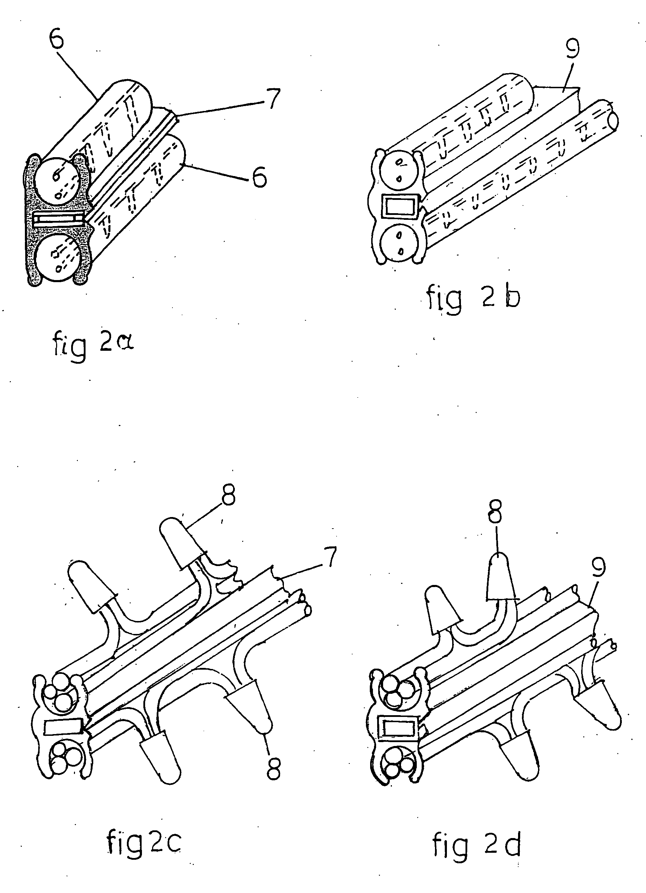

Figure 2a shows the clip from the front attached to two lines of rope light on a metal sheet.
Figure 2b shows the double-ended clip from the front, attached to two lines of rope light on a hollow section.
Figure 2c shows the double-ended clip from the front, attached to the electric wires of the mini bulb cords on a metal sheet.
Figure 2d shows the double-en.deu clip from the front, attached to the electric wires of the mini bulb cords on a hollow section.

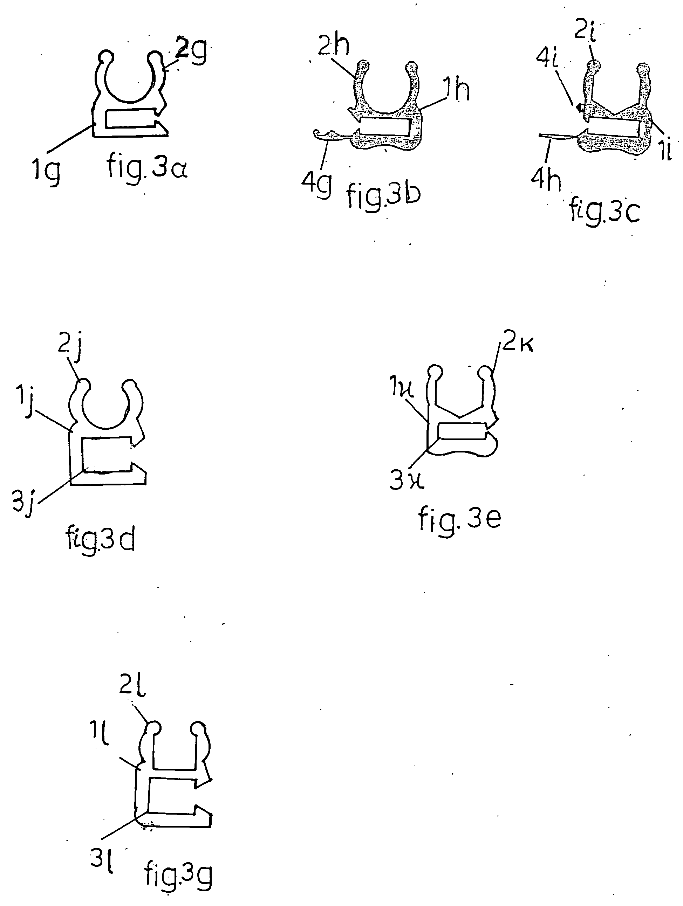

Figure 3a shows the one-ended clip (variation 6) that is used to create a schematic layout with one line of rope light (single line) or one line of electric wires with mini bulbs.
Figure 3b shows the one-ended clip (variation 7) with external fastening strip.
Figure 3c shows the one-ended clip (variation 8) with pin and external fastening strip.
Figure 3d shows the one-ended clip (variation 9) through the middle of which runs a hollow section.
Figure 3e shows the one-ended clip (variation 10) where the inside of the grips is polygonal-shaped.
Figure 3g shows the clip from the front (variation 12) where the inside of the grip is square-shaped

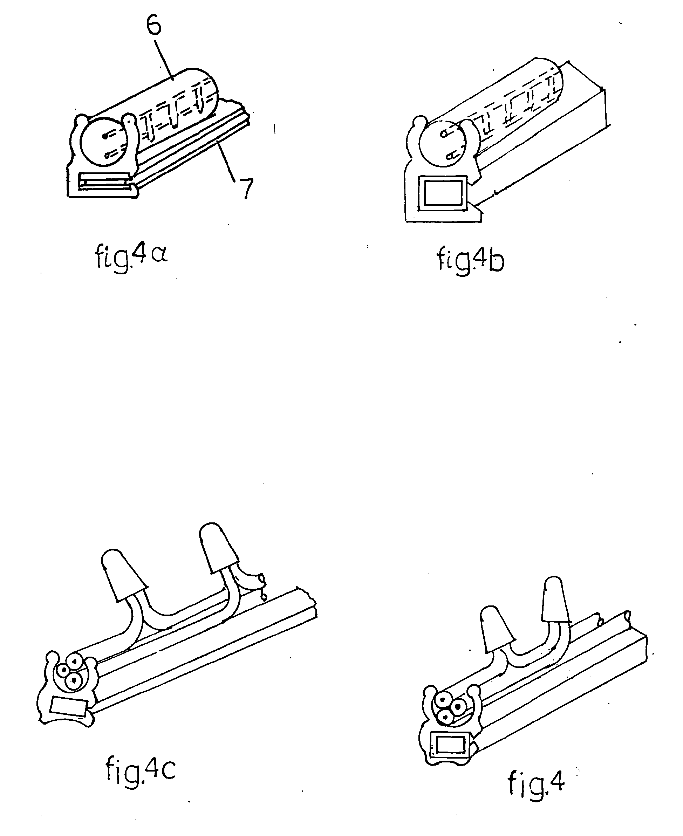

Figure 4a shows the one-ended clip from the front, attached to the rope light on a metal sheet
Figure 4b shows the one-ended clip from the front, attached to the rope light in a tube.
Figure 4c shows the one-ended c lip from the front, attached to the electric wires of the mini bulb cords on a metal sheet.
Figure 4d shows the one-ended clip from the front, attached to the electric wires of the mini bulb cords in a tube.

Referring to the diagrams, the clip for rope lights or wires with mini bulbs, and specifically its variation 1, comprises the main body (1a) at the upper and lower ends of which are sockets -grips (2a), (2b), the inside of which are cylindrical in shape (5a), (5b), to accommodate the rope light (6) or the electric wires with the mini bulbs (8).

This clip is flexible and can easily be mounted by hand simply by opening it and fastening it to the metal or plastic tubes or metal sheets, in such a way that after mounting the main body (1a), the sheet (7) or tube (9) passes through the middle (3) of it and is secured with the existing pins (4).

Variation 2 (1b) fastens with two projecting strips (4a), (4b).

Variation 3 (1c) fastens with one projecting strip (4c) and one pin (4d).

Variation 4 (1d) fastens with one projecting strip (4e).

Variation 5 has an opening (3e) for the hollow section to pass through.

Variation 6 (1g) regards a single-ended clip (2g).

Variation 7 (1h) regards a single-ended clip (2h) that fastens with a projecting strip (4g).

Variation 8 (1i) regards a single-ended clip (2i) that fastens with a projecting strip (4h) and pin (4i).

Variation 9 (1j) regards a single-ended clip (2j) that is specially shaped (3j) to accommodate a hollow section.

Variation 10 (1k) regards a single-ended clip (2k) that is specially shaped (3k) for a metal sheet.

Variation 11 (1l) regards a double-ended clip where the inside of the grip sockets is square-shaped and which is square-shaped in the centre (3l).

Lastly, variation 12 (1m) regards a single-ended clip where the inside of the grip sockets (2m) is square-shaped and which is square-shaped in the middle (3m).

The external side of the clip as well as the inside of the grips can be any geometrical shape.

The same applies to the solid sheet and the hollow section, whose shape will determine that of the middle of the main body (1a) of the clip.

The clip can be made of any suitable flexible material, from plastic to metal, rubber, wood or a combination thereof.

## Claims

1. A clip that is used to fasten different rope light motifs (6) or mini bulbs (8) to metal sheets (7) or tubes (9) whose first variation is **characterized by** the following: main body (1a), the ends of which terminate in grip sockets (2a) (2b), which have a special internal schematic shape (5a) (5b) circular, square, parallelogramic or polygonal to accommodate rope lights or wires with mini bulbs.
The inside of the body (1a) is specially shaped (3) in the form of a parallelogram, square, circle, or polygon to accommodate the solid metal sheet (7) or the tube (9), which is secured inside it by pins (4).
The clip can be made of any suitable material, flexible or non-flexible, from plastic, to metal, wood, rubber, or a combination thereof.
Variation 2 (1b) fastens with two projecting strips (4a) (4b).
Variation 3 (1c) fastens with one protecting strip (4c) and one pin (4d).
Variation 4 (1d) fastens with one projecting strip (4e).
Variation 5 has an opening (3e) for the hollow section to pass through.
Variation 6 (1g) regards a single-ended clip (2g).
Variation 7 (1h) regards a single-ended clip (2h) that fastens with a projecting strip (4g).
Variation 8 (1i) regards a single-ended clip (2i) that fastens with a projecting strip (4h) and pin (4i).
Variation 9 (1j) regards a single-ended clip (2j) that is specially shaped (3j) to accommodate a hollow section.
Variation 10 (1k) regards a single-ended clip (2k) that is specially shaped (3k) for a metal sheet.
Variation 11 (1l) regards a double-ended clip where the inside of the grip sockets is square-shaped and which is square-shaped in the centre (31).
Lastly, variation 12 (1m) regards a single-ended clip where the inside of the grip sockets (2m) is square-shaped and which is square-shaped in the middle (3m).

2. The clip of claim 1, **characterized by** the fact that it can have any inner geometrical shape (5a) (5b) whatsoever, so that it can accommodate even a square rope light.

3. The clip of claim 1, **characterized by** the fact that it is constructed in such a way that its main body (1a) ends in sockets-grips in both its upper and lower parts so as to accommodate a two line (double) rope light or two lines of mini bulbs.

4. The clip of claim 1, **characterised by** the fact that the middle (3) of its main body (1a) can have any geometrical or schematic shape whatsoever (parallelogram, square, circle or other shape) in order to accommodate any shape of metal sheet, hollow section, round or other shaped profile.

5. The clip of claim 1, **characterized by** the fact that it has pins (4) in its main body (1a) for securing to any shape of profile or any geometrical shape.

6. The clip of claim 1, **characterized by** the fact that its pins (4) can have any schematic shape and can secure either by fastening by drawing the clip onto the profile or by fastening with special projecting strips (4a, 4b, 4c, 4d, 4e, 4g, 4h, 4i) around the profile.

7. The clip of claim 1, **characterized by** the fact that it can accommodate wires for mini bulbs also in the middle (3) of the main body (1a).
